# NEUE EUROPÄISCHE PATENTSCHRIFT

(11) **EP 2 476 929 B2**
(45) Veröffentlichungstag und Bekanntmachung des Hinweises auf die Entscheidung über den Einspruch: **03.08.2016**
(45) Hinweis auf die Patenterteilung: 26.12.2012
(21) Anmeldenummer: 10016215.5
(22) Anmeldetag: 31.07.2009
(51) Int. Cl.: F16D 65/56, F16D 65/16

(54) **Nachstellvorrichtung für eine Scheibenbremse**
Adjustment device for a disc brake
Dispositif de réglage pour un frein à disque

(30) Priorität: 14.08.2008 DE 102008037775; 14.08.2008 DE 102008037774
(43) Veröffentlichungstag der Anmeldung: 18.07.2012
(62) Teilanmeldung aus: 09777593.6
(73) Patentinhaber: WABCO Europe BVBA, 1170 Brüssel (BE)
(72) Erfinder: Jungmann, Hans-Christian, 69517 Gorxheimertal (DE); Keller, Marcus, 69469 Weinheim (DE)
(74) Vertreter: Leinweber & Zimmermann

(56) Entgegenhaltungen:
- EP-A- 0 730 107
- EP-A- 1 683 986
- EP-A1- 1 596 092
- WO-A-2004/059187
- WO-A1-2006/111136
- DE-A1- 19 632 917

## Beschreibung

Die Erfindung betrifft eine Nachstellvorrichtung für eine Scheibenbremse, insbesondere für Nutzfahrzeuge, mit
einem Nachstellelement in Form einer Nachstellmutter und
einer Rutschkupplung zum Begrenzen des auf das Nachstellelement übertragenen Drehmoments.

Nachstellvorrichtungen der eingangs genannten Art sind bekannt, beispielsweise aus der EP 0 730 170 B1. Dabei wird die Rutschkupplung von einem Reibkonus an einer Abtriebshülse einerseits und von einer Druckhülse andererseits gebildet. Zum Aufbringen einer das Grenzmoment der Rutschkupplung bestimmenden Kraft auf die Abtriebshülse dienen ein Haltering, an dem sich eine Druckfeder abstützt, sowie eine Stützscheibe, auf die die Druckfeder eine elastische Kraft ausübt. Der als Drehmomentbegrenzungsbereich dienende Reibkonus liegt unter der Vorspannung der Druckfeder an einer ringförmigen Kante der Druckhülse an. Diese Konstruktion kann Verschleiß unterliegen. Ferner ist die nur federgehaltene Stützscheibe schwingungsanfällig.

Der Erfindung liegt die Aufgabe zugrunde, die Nachstellvorrichtung der oben genannten Art derart weiterzubilden, daß sie flexibler ist und mithin derart gestaltet werden kann, daß größere Verschleißfestigkeit und Funktionssicherheit erzielt werden.

Erfindungsgemäß wird die gestellte Aufgabe durch eine Nachstellvorrichtung nach Anspruch 1 gelöst.

Mit anderen Worten wird die Rutschkupplung nicht mehr nur unter Einbeziehung der als Nachstellelement in Form einer Nachstellmutter dienenden Druckhülse gebildet. Vielmehr wird ein separates Reibelement eingeführt, das mit dem Nachstellelement in beiden Richtungen drehgekoppelt ist. Durch dieses separate Reibelement wird die Gesamtkonstruktion flexibler. Es kann damit auch eine Lösung mit geringerer Verschleißanfälligkeit und erhöhter Funktionssicherheit verwirklicht werden.

Zu der Rutschkupplung gehören also erfindungsgemäß einerseits eine Anlagefläche an dem Nachstellelement und eine Reibfläche, beispielsweise an einem Abtriebselement / einer Abtriebshülse des Nachstellers und andererseits das separate zusätzliche Reibelement. Dadurch wird das zu übertragende Moment über zwei Wege durch die Ruschkupplung übertragen, nämlich zum einen über die Anlagefläche an dem Nachstellelement und die Reibfläche, und zum anderen über das Reibelement, das mit dem Nachstellelement in beiden Drehrichtungen gekoppelt ist. Mit anderen Worten gehören erfindungsgemäß zu der Rutschkupplung zwei Teilkupplungen, die funktionsmäßig parallel geschaltet sind. Es kann größere Verschleißfestigkeit und größere Funktionssicherheit erzielt werden.

Die DE 43 23 292 A1 zeigt eine Nachstellvorrichtung für eine Scheibenbremse mit einer Rutschkupplung. Zu der Rutschkupplung gehört ein Ring mit einer Stirnverzahnung, der drehfest und axial nicht verschiebbar mit einer zu der Nachstellvorrichtung gehörenden Profilwelle verbunden ist.

Erfindungsgemäß bevorzugt ist eine einen Teil der Rutschkupplung bildende Reibfläche des Reibelements in eingebautem Zustand einer Bremsscheibe zugewandt.

Mitanderen Worten liegt die Reibfläche "innen", wodurch der Gesamtaufbau kompakter wird.

Das Reibelement weist erfindungsgemäß weiter bevorzugt eine Kuppeleinrichtung zum Koppeln mit einer Justiereinrichtung für das Nachstellelement auf.

Diese Kuppeleinrichtung bietet die Möglichkeit, die Justiereinrichtung, die nach der EP 0 730 107 B1 an der Druckhülse selbst ausgebildet ist, von der Druckhülse wegzunehmen, beispielsweise daneben anzusiedeln, wodurch die Baulänge in Axialrichtung der Nachstellvorrichtung verringert werden kann.

Zu diesem Zwecke weist die Kuppeleinrichtung erfindungsgemäß bevorzugt einen Zahnkranz auf. Diese Lösung wird als mechanisch besonders einfach zu realisieren bevorzugt.

Zusätzlich oder alternativ kann vorgesehen sein, daß die Kuppeleinrichtung eine von der Kreisform abweichende Innenkontur an dem Reibelement, beispielsweise in Form eines Innenzahnkranzes, und/oder eine Profilierung auf der der Bremsscheibe abgewandten Seite des Reibelements aufweist. Nach dieser Ausgestaltung stellt das Reibelement selbst die Justiereinrichtung dar, in die beispielsweise zum Justieren ein der Innenkontur angepaßtes Werkzeug eingesteckt werden kann.

Ferner kann zusätzlich oder alternativ eine Profilierung des Nachstellelements zum Koppeln mit einem Justierwerkzeug vorgesehen sein.

Bei dieser Ausgestaltung ist das Nachstellelement beispielsweise auf seiner der Bremsscheibe abgewandten Seite mit einer Ausnehmung versehen, in die ein Inbusschlüssei paßt. Mit dem Inbusschlüssel kann eine Justierung vorgenommen werden, beispielsweise nach Erneuerung eines Bremsbelages. Anstelle derAusnehmung für einen Inbusschlüssei kann auch ein Innensechskant, ein Außensechskant, ein Schlitz für einen Schraubendreher oder dergleichen vorgesehen sein. Das Werkzeug kann dabei jedes Mal zum Justieren wieder anzusetzen sein. Es kann aber auch vorgesehen sein, daß zumindest ein Teil des Werkzeugs dauerhaft über die Profilierung mit dem Nachstellelement gekoppelt ist.

Erfindungsgemäß weiter bevorzugt ist eine Vorspanneinrichtung zum Vorspannen der Rutschkupplung im Sinne eines Reibschlusses vorgesehen.

Die von der Vorspanneinrichtung aufgebrachte Vorspannkraft bestimmt dadurch das maximal von der Rutschkupplung übertragbare Drehmoment

Die Vorspanneinrichtung weist erfindungsgemäß weiter bevorzugt eine elastische Einrichtung auf der einer Bremsscheibe in eingebautem Zustand abgewandten Seite des Reibelements auf.

Mit anderen Worten liegt die Vorspannrichtung auf der "Außenseite" des Reibelements. Dadurch nimmt sie auf der "Innenseite" des Reibelements keinen für andere Bauteile benötigten Bauraum ein.

Die Vorspanneinrichtung weist nach einer besonders bevorzugten Ausführungsform der Erfindung eine, zwei oder mehr Tellerfeder(n) auf.

Diese Ausgestaltung bietet wiederum den Vorteil des geringen Bauraums in Axialrichtung.

Eine einen Teil der Rutschkupplung bildende Reibfläche ist erfindungsgemäß weiter bevorzugt ringförmig.

Dabei ist weiter bevorzugt eine einen Teil der Rutschkupplung bildende Reibfläche zumindest zum Teil eben, kegelschnittmantelförmig oder verzahnt.

Die konkrete Ausgestaltung der Reibfläche ist auf die Gesamtumstände abzustellen. So kann beispielsweise dann, wenn eine größere Reibfläche erforderlich ist, die kegelschnittmantefförmige Reibfläche die beste Lösung sein. Große Grenzmomente sind mit einer verzahnten Reibfläche erzielbar.

Neben der oben im einzelnen beschriebenen Nachstellvorrichtung schafft die Erfindung auch eine Scheibenbremse, insbesondere für Nutzfahrzeuge, mit einer solchen Nachstellvorrichtung.

Bevorzugt sind zumindest Teile der Nachstellvorrichtung derart mit einem Druckstück gekoppelt, daß sie beim Zuspannen dessen Bewegung in Axialrichtung der Bremse folgen.

Während auch Teile der Nachstellvorrichtung mit einem Sattel der Scheibenbremse gekoppelt sein können, bietet eine komplette Kopplung mit dem Druckstück den Vorteil, daß Sattelschwingungen nicht zu Fehlstellungen führen können.

Das Druckstück weist erfindungsgemäß bevorzugt eine rechteckige Kontur auf, wobei es insbesondere eine Traversenstruktur hat.

Nach einer besonders bevorzugten Ausführungsform der Erfindung ist eine Justiereinrichtung vorgesehen, deren Drehachse nicht mit der Drehachse der Rutschkupplung zusammenfällt.

Mit anderen Worten ist die Justiereinrichtung quasi ,neben" der Rutschkupplung angeordnet. Diese Ausgestaltung kann dazu dienen, den Bauraum der Bremse in Axialrichtung zu verkürzen.

Im folgenden ist die Erfindung anhand eines bevorzugten Ausführungsbeispiels unter Bezugnahme auf die beiliegende Zeichnung mit weiteren Einzelheiten näher erläutert. Dabei zeigen
- Figur 1: eine Schnittansicht einer Nutzfahrzeug-Scheibenbremse nach einem bevorzugten Ausführungsbeispiel der Erfindung,
- Figur 2: eine andere Schnittansicht der erfindungsgemäßen Bremse, mit weiteren Einzelheiten und
- Figur 3: eine Axialansicht eines Reibelements der Bremse nach Figur 1.

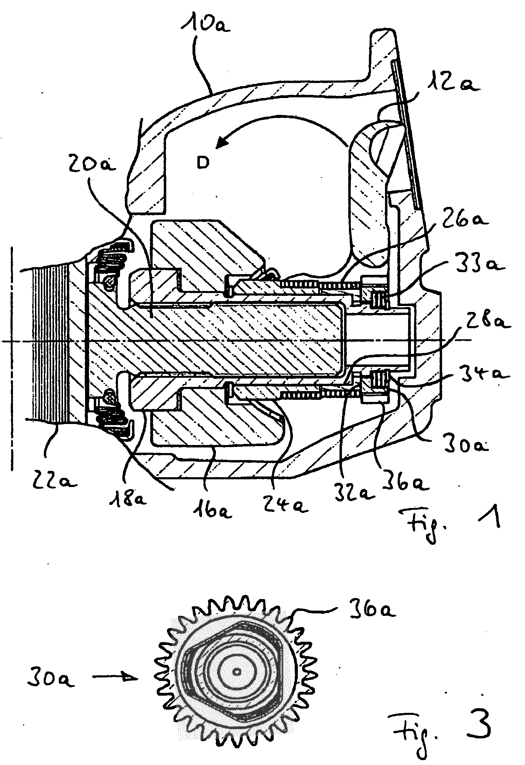

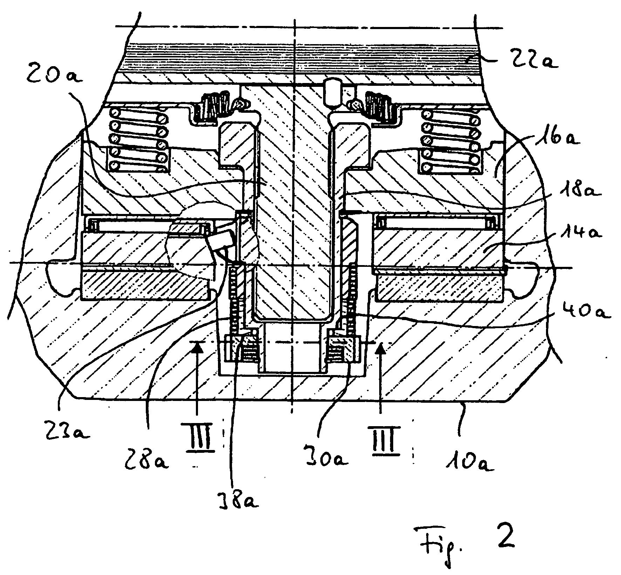

In den Figuren 1 bis 3 ist eine Scheibenbremse dargestellt. Sie weist einen Bremssattel 10a auf. Ferner weist sie eine Zuspanneinrichtung auf, zu der ein Drehhebel 12a mit einer Bremswelle 14a gehört. Wird der Drehhebel in Richtung "D" verschwenkt, so übt er Druck auf ein Druckstück 16a aus, das eine Traverse der Bremse bildet. Das Druckstück 16a seinerseits drückt auf eine Druckhülse 18a, die die Zuspannkraft dann über eine Druckschraube 20a auf einen Bremsbelag 22a überträgt. Daherwird bei Betätigen des Drehhebels 12a der Bremsbelag 22a gegen eine in der Zeichnung nicht dargestellte Bremsscheibe gedrückt.

Durch einen Stift 23a ist eine Antriebshülse 24a mit der Bremswelle 14a derart gekoppelt, daß ein Verschwenken des Drehhebels 12a nach Überwindung eines Lüftspiels zu einem Verdrehen der Antriebshülse 24a führt. Die Längsachse des Stiftes 23a ist bezüglich der Drehachse der Bremswelle 14a schräg angestellt, beispielsweise um 18°. Wegen der dadurch erzielten verbesserten Übersetzung wird ein höheres Maß an Nachstellung pro Betätigung der Bremse erzielt. Die Antriebshülse 24a ist über eine als Einwegkupplung dienende Schlingfeder 26a mit einer Abtriebshülse 28a gekoppelt. Dadurch dreht sich beim Zuspannen auch die Abtriebshülse 28a. Die Abtriebshülse 28a bildet zusammen mit einer Stützscheibe 30a eine Rutschkupplung. Dazu liegt die Stützscheibe 30a mit ihrer nach "innen" weisenden Reibfläche 32a an der Abtriebshülse 28a an. Die Abtriebshülse 28a ihrerseits liegt bei diesem Ausführungsbeispiel mit einer Reibfläche 40a (hier eben) an einer Anlagefläche 38a der Druckhülse 18a an. Zur Vorspannung dienen drei Tellerfedern 33a, die sich an einem Sicherungsring 34a abstützen.

Die Stützscheibe 30a hat gemäß Figur 3 eine von der Kreisform abweichende Innenkontur, im gezeigten Ausführungsbeispiel etwa sternförmig, wobei die Außenkontur der Druckhülse 18a dort, wo die Stützscheibe 30a sitzt, eine komplementäre Außenkontur hat, so daß die Stützscheibe 30a mit der Druckhülse 18a in beiden Drehrichtungen drehgekoppelt ist.

Wegen der oben im einzelnen beschriebenen Kopplungen der einzelnen Bauteile miteinander bewirkt ein Verschwenken des Bremshebels 12a in Richtung "D" nach Überwinden des Lüftspiels ein Verdrehen der Druckhülse 18a, die mit der drehfest gehaltenen Druckschraube 20a verschraubt ist, so daß sich die Druckschraube 20a in Figur 5 nach links aus der Druckhülse 18a herausschraubt.

Dieses Herausschrauben erfolgt aber nur, bis der Bremsbelag 22a an der Bremsscheibe anliegt. Wird dann nämlich weiter zugespannt, steigt die Reibung zwischen dem Druckstück 16a und der Druckhülse 18a, so daß sich die Druckhülse 18a nicht mehrweiter verdrehen kann. In ähnlicher Weise wirkt das mit zunehmendem Druck auftretende Reibmoment innerhalb der Schraubverbindung zwischen der Druckhülse 18a und der Druckschraube 20a.

Daher rutscht bei weiterem Verschwenken des Drehhebels 12a in Richtung "D" die Abtriebshülse 28a bezüglich der Stützscheibe 30a und der Druckhülse 18a durch. Ein weiteres Herausschrauben der Druckschraube 20a aus der Druckhülse 18a erfolgt also nicht mehr.

Die oben im einzelnen beschriebene Konstruktion wird in der Fachsprache als kraft-, last- oder drehmomentabhängige Nachstellung bezeichnet, weil eine Nachstellung entsprechend den obigen Erläuterungen nur erfolgt, bis die Kraft, die Last bzw. das Drehmoment einen entsprechend der Ausgestaltung des Reibschlusses zwischen der Abtriebshülse 28a einerseits und der Stützscheibe 30a sowie der Druckhülse 18a andererseits übertragbaren Wert übersteigt. Dieser Wert kann insbesondere durch entsprechende Dimensionierung der Tellerfedern 33a vorgegeben werden.

Beim Lösen der Bremse, d.h. beim Verschwenken des Drehhebels 12a entgegen der Schwenkrichtung "D", verschiebt sich die Druckschraube 20a nicht wieder durch Drehen der Druckhülse 18a in die Druckhülse 18a hinein, weil die Schlingfeder 26a in dieser Drehrichtung auskuppelt. Die Schlingfeder 26a stellt mithin eine richtungsabhängige Komponente des Nachstellgetriebes dar, wohingegen die Stützscheibe 30a mit ihrer Reibfläche 32a die Momentenabhängigkeitdes Nachstellgetriebes gewährleistet.

Die Stützscheibe 30a ist gemäß Figur 3 an ihrem Außenrand mit einem Zahnkranz 36a versehen. Der Zahnkranz 36a greift in eingebautem Zustand in eine in der Zeichnung nicht dargestellte Justierwelle ein. Die Justierwelle liegt also quasi "neben" der eigentlichen Nachstelleinrichtung, was den Vorteil der geringeren axialen Baulänge hat. Die Justierwelle kann beispielsweise einen Sechskantkopf aufweisen. Um die Zugänglichkeit des Sechskantkopfes zum Justieren mittels eines entsprechenden Werkzeugs zu gewährleisten, ist eine ebenfalls in der Zeichnung nicht dargestellte Arbeitsöffnung an dem Sattel 10a vorgesehen. Die Arbeitsöffnung kann zum Schutze gegen Verschmutzung mit einem Stopfen verschlossen werden.

Die Justierwelle dient beispielsweise dazu, die Stützscheibe 30a und die damit drehgekoppelte Druckhülse 18a zu verdrehen, um die Druckschraube 20a wieder in die Druckhülse 18a einzuschrauben, beispielsweise nach Erneuerung des Bremsbelages 22a.

Zusätzlich oder alternativ kann aber die Stützscheibe 30a selbst als Justierelement dienen. Dazu kann sie auf der der Bremsscheibe abgewandten Seite eine von der Kreisform abweichende Innenkontur und/oder eine Profilierung haben, in die zum Justieren ein entsprechendes Werkzeug einzustecken ist. Auch zu diesem Zwecke wird in einem solchen Falle eine entsprechende Arbeitsöffnung an dem Sattel 10a vorgesehen sein, wiederum mit einem Stopfen verschließbar. Es kann auch vorgesehen sein, ein Justierwerkzeug unmittelbar an der Druckhülse 18a anzusetzen.

Wie die obigen Ausführungen zeigen, kommen der Stützscheibe 30a verschiedene Funktionen zu:
Zum einen bildet sie einen Teil der Rutschkupplung zur Begrenzung des übertragbaren Moments. Sie gewährleistet daher die Momentenabhängigkeit der Nachstellvorrichtung, die teilweise in der Literatur auch als Kraft- oder Lastabhängigkeit bezeichnet wird.

Ferner dient die Stützscheibe 30a der Kopplung des die Zuspannung bewirkenden Drehhebels 12a mit der Nachstellvorrichtung, weil sie drehfest auf der Druckhülse 18a sitzt und daher Drehmomente übertragen kann.

Schließlich dient sie dazu, die Möglichkeit zu schaffen, die Justierwelle "neben" die eigentliche Nachstelleinrichtung zu setzen, wodurch erreicht werden kann, daß die Justierwelle die axiale Baulänge nicht vergrößert.

An dieser Stelle sei allerdings ausdrücklich darauf hingewiesen, daß die Erfindung auch Lösungen ohne eine solche Justierwelle neben der eigentlichen Nachstelleinrichtung abdeckt. So kann nämlich beispielsweise die Stützscheibe 30a eine von der Kreisform abweichende Innenkontur haben, so daß durch Ansetzen eines entsprechenden Werkzeugs ein Justieren der Nachstelleinrichtung unmittelbar an der Stützscheibe 30a erfolgen kann.

Die in der obigen Beschreibung, den Ansprüchen sowie der Zeichnung offenbarten Merkmale der Erfindung können sowohl einzeln als auch in beliebigen Kombinationen für die Verwirklichung der Erfindung in ihren verschiedenen Ausführungsformen wesentlich sein. So ist die Erfindung anwendbar auf Bremsen mit einer, zwei oder mehr Druckschraube(n)/-spindel(n) sowie auf Bremsen mit und ohne Druckstück.

## Patentansprüche

1. Nachstellvorrichtung für eine Scheibenbremse, insbesondere für Nutzfahrzeuge, mit
einem Nachstellelement (18a) in Form einer Nachstellmutter und
einer Rutschkupplung (28a, 30a, 32a, 38a, 40a) zum Begrenzen des auf das Nachstellelement übertragbaren Drehmoments, wobei
die Rutschkupplung ein Reibelement (30a) aufweist, das mit dem Nachstellelement in beiden Drehrichtungen drehgekoppelt ist,
**dadurch gekennzeichnet, daß**
das Reibelement (30a) eine von der Kreisform abweichende Innenkontur hat und auf dem Nachstellelement (18a) sitzt und
das Nachstellelement dort, wo das Reibelement sitzt, eine komplementäre Außenkontur hat, so daß das Reibelement mit dem Nachstellelement in beiden Richtungen drehgekoppelt ist.

2. Nachstellvorrichtung nach Anspruch 1, **dadurch gekennzeichnet, daß** eine einen Teil der Rutschkupplung (28a, 30a, 32a, 38a, 40a) bildende Reibfläche (32a) des Reibelements (30a) in eingebautem Zustand einer Bremsscheibe zugewandt ist.

3. Nachstellvorrichtung nach Anspruch 1 oder 2, **dadurch gekennzeichnet, daß** das Reibelement (30a) eine Kuppeleinrichtung (36a) zum Koppeln mit einer Justiereinrichtung für das Nachstellelement (18a) aufweist.

4. Nachstellvorrichtung nach Anspruch 3, **dadurch gekennzeichnet, daß** die Kuppeleinrichtung (36a) einen Zahnkranz aufweist.

5. Nachstellvorrichtung nach Anspruch 3 oder 4, **dadurch gekennzeichnet, daß** die Kuppeleinrichtung eine von der Kreisform abweichende Innenkontur an dem Reibelement (30a) aufweist.

6. Nachstellvorrichtung nach einem der Ansprüche 3 bis 5, **dadurch gekennzeichnet, daß** die Kuppeleinrichtung eine Profilierung auf der der Bremsscheibe abgewandten Seite des Reibelements (30a) aufweist.

7. Nachstellvorrichtung nach einem der vorangehenden Ansprüche, **gekennzeichnet durch** eine Profilierung des Nachstellelements zum Koppeln mit einem Justierwerkzeug oder -einsatz.

8. Nachstellvorrichtung nach einem der vorangehenden Ansprüche, **gekennzeichnet durch** eine Vorspanneinrichtung (33a) zum Vorspannen der Rutschkupplung (28a, 30a, 32a, 38a, 40a) im Sinne eines Reibschlusses.

9. Nachstellvorrichtung nach Anspruch 8, **dadurch gekennzeichnet, daß** die Vorspanneinrichtung (33a) eine elastische Einrichtung auf der einer Bremsscheibe in eingebautem Zustand abgewandten Seite des Reibelements (30a) aufweist.

10. Nachstellvorrichtung nach Anspruch 8 oder 9, **dadurch gekennzeichnet, daß** die Vorspanneinrichtung (33a) eine, zwei oder mehr Tellerfedern(n) aufweist.

11. Nachstellvorrichtung nach einem der vorangehenden Ansprüche, **dadurch gekennzeichnet, daß** eine einen Teil der Rutschkupplung (28a, 30a, 32a, 38a, 40a) bildende Reibfläche (32a) ringförmig ist.

12. Nachstellvorrichtung nach einem der vorangehenden Ansprüche, **dadurch gekennzeichnet, daß** eine einen Teil der Rutschkupplung (28a, 30a, 32a, 38a, 40a) bildende Reibfläche (32a) zumindest zum Teil eben, kegelschnittmantelförmig oder verzahnt ist.

13. Scheibenbremse, insbesondere für Nutzfahrzeuge, mit einer Nachstellvorrichtung nach einem der vorangehenden Ansprüche.

14. Scheibenbremse nach Anspruch 13, **dadurch gekennzeichnet, daß** zumindest Teile der Nachstellvorrichtung derart mit einem Druckstück (16a) gekoppelt sind, daß sie beim Zuspannen dessen Bewegung in Axialrichtung der Bremse folgen.

15. Scheibenbremse nach Anspruch 14, **dadurch gekennzeichnet, daß** das Druckstück (16a) eine rechteckige Kontur aufweist.

16. Scheibenbremse nach Anspruch 14 oder 15, **dadurch gekennzeichnet, daß** das Druckstück (16a) eine Traversenstruktur aufweist.

17. Scheibenbremse nach einem der Ansprüche 13 bis 16, **gekennzeichnet durch** eine Justiereinrichtung, deren Drehachse nicht mit der Drehachse der Rutschkupplung (28a, 30a, 32a, 38a, 40a) zusammenfällt.

## Claims

1. Readjustment device for a disc brake, in particular for utility vehicles, having
a readjustment element (18a) in the form of a readjustment nut, and
a slipping clutch (28a, 30a, 32a, 38a, 40a) for limiting the torque that can be transmitted to the readjustment element, wherein
the slipping clutch has a friction element (30a) which is coupled in terms of rotation to the readjustment element in both directions of rotation,
**characterized in that**
the friction element (30a) has a non-circular internal contour and is seated on the readjustment element (18a), and
the readjustment element has, where the friction element is seated, a complementary external contour such that the friction element is coupled in terms of rotation to the readjustment element in both directions.

2. Readjustment device according to Claim 1, **characterized in that** a friction surface (32a), which forms a part of the slipping clutch (28a, 30a, 32a, 38a, 40a), of the friction element (30a) faces, in an installed state, towards a brake disc.

3. Readjustment device according to Claim 1 or 2, **characterized in that** the friction element (30a) has a coupling means (36a) for coupling to an adjustment means for the readjustment element (18a).

4. Readjustment device according to Claim 3, **characterized in that** the coupling means (36a) has a toothed ring.

5. Readjustment device according to Claim 3 or 4, **characterized in that** the coupling means has a non-circular internal contour on the friction element (30a).

6. Readjustment device according to one of Claims 3 to 5, **characterized in that** the coupling means has a profiling on that side of the friction element (30a) which is averted from the brake disc.

7. Readjustment device according to one of the preceding claims, **characterized by** a profiling of the readjustment element for coupling to an adjustment tool or adjustment insert.

8. Readjustment device according to one of the preceding claims, **characterized by** a preload device (33a) for preloading the slipping clutch (28a, 30a, 32a, 38a, 40a) so as to generate frictional engagement.

9. Readjustment device according to Claim 8, **characterized in that** the preload device (33a) has an elastic device on that side of the friction element (30a) which is averted from a brake disc in the installed state.

10. Readjustment device according to Claim 8 or 9, **characterized in that** the preload device (33a) has one, two or more disc spring(s).

11. Readjustment device according to one of the preceding claims, **characterized in that** a friction surface (32a) which forms a part of the slipping clutch (28a, 30a, 32a, 38a, 40a) is of ring-shaped form.

12. Readjustment device according to one of the preceding claims, **characterized in that** a friction surface (32a) which forms a part of the slipping clutch (28a, 30a, 32a, 38a, 40a) is at least partially planar, of frustoconical shape or toothed.

13. Disc brake, in particular for utility vehicles, having a readjustment device according to one of the preceding claims.

14. Disc brake according to Claim 13, **characterized in that** at least parts of the readjustment device are coupled to a thrust piece (16a) in such a way that said parts follow the movement of said thrust piece in an axial direction of the brake during a brake-application process.

15. Disc brake according to Claim 14, **characterized in that** the thrust piece (16a) has a rectangular contour.

16. Disc brake according to Claim 14 or 15, **characterized in that** the thrust piece (16a) has a traverse structure.

17. Disc brake according to one of Claims 13 to 16, **characterized by** an adjustment device, the axis of rotation of which does not coincide with the axis of rotation of the slipping clutch (28a, 30a, 32a, 38a, 40a).

## Revendications

1. Dispositif de réglage pour freins à disques, en particulier pour véhicules utilitaires, comprenant un élément de réglage (18a) en forme d'écrou de réglage et
un accouplement à glissement (28a, 30a, 32a, 38a, 40a) pour limiter le couple pouvant être transmis à l'élément de réglage,
l'accouplement à glissement présentant un élément de friction (30a) qui est accouplé en rotation à l'élément de réglage dans les deux sens de rotation,
**caractérisé en ce que** l'élément de friction (30a) présente un contour interne s'écartant d'une forme circulaire et repose sur l'élément de réglage (18a) et
l'élément de réglage, à l'emplacement de l'élément de friction, présente un contour externe complémentaire, de sorte que l'élément de friction soit accouplé à rotation dans les deux sens à l'élément de réglage.

2. Dispositif de réglage selon la revendication 1, **caractérisé en ce qu'**une surface de friction (32a) de l'élément de friction (30a) formant une partie de l'accouplement à glissement (28a, 30a, 32a, 38a, 40a) est tournée vers un disque de frein dans l'état monté.

3. Dispositif de réglage selon la revendication 1 ou 2, **caractérisé en ce que** l'élément de friction (30a) présente un dispositif d'accouplement (36a) pour l'accouplement à un dispositif d'ajustement pour l'élément de réglage (18a).

4. Dispositif de réglage selon la revendication 3, **caractérisé en ce que** le dispositif d'accouplement (36a) présente une couronne dentée.

5. Dispositif de réglage selon la revendication 3 ou 4, **caractérisé en ce que** le dispositif d'accouplement présente un contour interne s'écartant de la forme circulaire au niveau de l'élément de friction (30a).

6. Dispositif de réglage selon l'une quelconque des revendications 3 à 5, **caractérisé en ce que** le dispositif d'accouplement présente un profilage sur le côté de l'élément de friction (30a) opposé au disque de frein.

7. Dispositif de réglage selon l'une quelconque des revendications précédentes, **caractérisé par** un profilage de l'élément de réglage pour l'accouplement à un outil d'ajustement ou à un insert d'ajustement.

8. Dispositif de réglage selon l'une quelconque des revendications précédentes, **caractérisé par** un dispositif de précontrainte (33a) pour précontraindre l'accouplement glissant (28a, 30a, 32a, 38a, 40a) dans le sens d'un accouplement par engagement par friction.

9. Dispositif de réglage selon la revendication 8, **caractérisé en ce que** le dispositif de précontrainte (33a) présente un dispositif élastique sur le côté de l'élément de friction (30a) opposé à un disque de frein dans l'état monté.

10. Dispositif de réglage selon la revendication 8 ou 9, **caractérisé en ce que** le dispositif de précontrainte (33a) présente un, deux ou plus de deux ressorts Belleville.

11. Dispositif de réglage selon l'une quelconque des revendications précédentes, **caractérisé en ce qu'**une surface de friction (32a) formant une partie de l'accouplement glissant (28a, 30a, 32a, 38a, 40a) est annulaire.

12. Dispositif de réglage selon l'une quelconque des revendications précédentes, **caractérisé en ce qu'**une surface de friction (32a) formant une partie de l'accouplement glissant (28a, 30a, 32a, 38a, 40a) est au moins en partie plane, en forme d'enveloppe de section conique ou dentée.

13. Frein à disques, en particulier pour véhicules utilitaires, comprenant un dispositif de réglage selon l'une quelconque des revendications précédentes.

14. Frein à disques selon la revendication 13, **caractérisé en ce qu'**au moins des parties du dispositif de réglage sont accouplées à une pièce de pression (16a) de telle sorte qu'elles suivent son mouvement dans la direction axiale du frein lors du serrage.

15. Frein à disques selon la revendication 14, **caractérisé en ce que** la pièce de pression (16a) présente un contour rectangulaire.

16. Frein à disques selon la revendication 14 ou 15, **caractérisé en ce que** la pièce de pression (16a) présente une structure de traverse.

17. Frein à disques selon l'une quelconque des revendications 13 à 16, **caractérisé par** un dispositif d'ajustement dont l'axe de rotation ne coïncide pas avec l'axe de rotation de l'accouplement glissant (28a, 30a, 32a, 38a, 40a).
